# EUROPÄISCHE PATENTSCHRIFT

(11) **EP 0 635 646 B1**
(45) Veröffentlichungstag und Bekanntmachung des Hinweises auf die Patenterteilung: **07.10.1998**
(21) Anmeldenummer: 94109262.9
(22) Anmeldetag: 16.06.1994
(51) Int. Cl.: F16B 13/14, E04B 1/41, E04F 13/08, E04B 2/44, E04B 2/30

(54) **Verblendanker**
Dowel for wall covering
Cheville pour revêtement de mur

(30) Priorität: 20.07.1993 DE 9310816 U
(43) Veröffentlichungstag der Anmeldung: 25.01.1995
(73) Patentinhaber: fischerwerke Artur Fischer GmbH & Co. KG, D-72178 Waldachtal (DE)
(72) Erfinder: Hein, Bernd, Dipl.-Ing., D-72250 Freudenstadt (DE)

(56) Entgegenhaltungen:
- EP-A- 0 241 708
- EP-A- 0 324 078
- DE-A- 3 916 612
- DE-A- 4 004 207
- FR-A- 2 614 912

## Beschreibung

Die Erfindung betrifft einen Verblendanker zur Verbindung des Verblendmauerwerks mit der Wandinnenschale gemäß der Gattung des Anspruches 1.

Zur Sanierung von abgängigem zweischaligem Mauerwerk ist aus der DE 39 16 612 A1 ein Verblendanker bekannt, der aus einem in beiden Mauerwerken mit einem aushärtbaren Bindemittel festsetzbaren Ankerdraht besteht. Der Ankerdraht ist mit seinem in der Wandinnenschale befindlichen Teil vollständig und mit seinem im Verblendmauerwerk befindlichen Teil teilweise in einem Ankerrohr eingebettet. Im Bereich der Wandinnenschale weist dieses Ankerrohr Durchbrechungen auf und ist mit einem Kunststoffstrumpf überzogen. Beim Injizieren des Bindemittels wird über das Ankerrohr der Kunststoffstrumpf mit Bindemittel gefüllt, so daß sich in den Hohlräumen der Wandinnenschale zur Festsetzung des Ankerrohrs und des Ankerdrahts Wulste ausbilden.

Ein Einsatz des bekannten Verblendankers ist nur dann möglich, wenn das Verblendmauerwerk aus Vollsteinen besteht, so daß über das Bohrloch im Verblendmauerwerk und dem bis zum Verblendmauerwerk reichenden Ankerrohr ein Injizieren des Bindemittels bis in die Wandinnenschale ermöglicht wird.

Der Erfindung liegt die Aufgabe zugrunde, einen Verblendanker zu schaffen, der unabhängig von der Art der Festsetzung des Ankerdrahts in der Wandinnenschale eine Verbindung mit einem aus Hohllochsteinen bestehenden Verblendmauerwerk ermöglicht.

Die Lösung dieser Aufgabe wird durch die im Anspruch 1 angegebenen Merkmale erreicht. Auf den in beliebiger Weise in der Wandinnenschale festgesetzten und in die Bohrung des Verblendmauerwerks hineinragenden Ankerdraht wird die erfindungsgemäße Netzhülse aufgesteckt. Beim Aufstecken wird der durch eine Membrane gebildete Boden des Schaftteiles mit der Spitze des Ankerdrahts durchstoßen und soweit verschoben, bis sich das Schaftteil im unteren und das Kopfteil im oberen Quersteg des Hohllochsteines befinden. Beim Injizieren des Bindemittels, beispielsweise mineralischem Mörtel oder Kunstharzmörtel, füllt sich die Netzhülse, wobei der Kunststoffstrumpf im oder in den Hohlräumen des Hohllochsteines Wulste ausbildet. Dadurch entsteht im Hohllochstein nach dem Aushärten des Bindemittels ein Formschluß, der über den ebenfalls in Bindemittel eingebetteten Ankerdraht eine zug- und druckfeste Verbindung mit der Wandinnenschale herstellt. Durch den Verschluß der Netzhülse mit der Membrane, die sich beim Durchstoßen mit dem Ankerdraht dichtend am Ankerdraht anlegt, wird ein Wegfließen des Bindemittels verhindert.

Die Gitterhülse mit Schaft- und Kopfteil wird zweckmäßigerweise aus Kunststoff im Spritzgußverfahren hergestellt. Damit ist es möglich, die Membrane am Schaftteil einstückig als dünne Spritzhaut auszubilden.

Zur Fixierung der Netzhülse beim Einschieben in die Bohrung des Verblendmauerwerks einerseits und zur Abdichtung des Bohrloches im oberen Quersteg kann am Kopfteil ein als Rand ausgebildeter Dichtflansch angeordnet sein.

Um das Verschweißen des Kunststoffstrumpfes mit der Gitterhülse zu erleichtern, ist es zweckmäßig, am Kopf- und Schaftteil jeweils einen umlaufenden Schweißwulst anzuordnen.

Aufgrund der erfindungsgemäßen Lösung wird der Abstand zwischen der Wandinnenschale und dem Verblendmauerwerk lediglich über den Ankerdraht überbrückt. Damit weist die Verbindung eine ausreichende Elastizität auf, um leichte Verformungen oder Verschiebungen zwischen Verblend- und Wandinnenschale ausgleichen zu können.

Die Netzhülse ist ohne weiteres auch dann verwendbar, wenn das Verblendmauerwerk aus Vollbausteinen besteht. Allerdings ist es in diesem Fall zweckmäßig, den Kunststoffstrumpf abzuziehen, um eine bessere Verbindung zwischen dem eingespritzten Bindemittel und dem Verblendmauerwerk zu schaffen.

Die Erfindung wird nachfolgend anhand der Zeichnung näher erläutert.

Es zeigen:
- Figur 1: den erfindungsgemäßen Verblendanker im eingebauten Zustand und
- Figur 2: die Netzhülse im Teilschnitt.

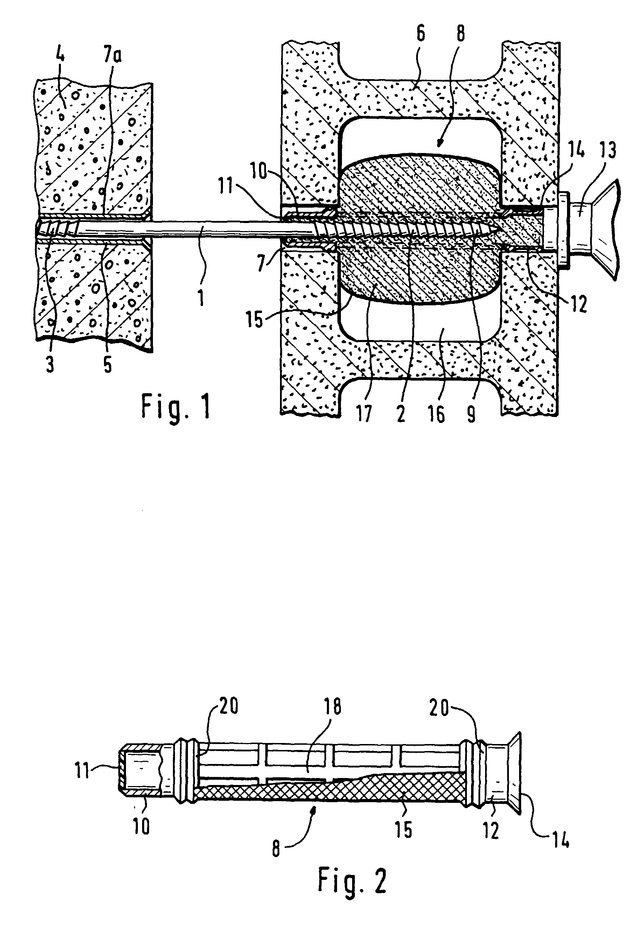

Der in Figur 1 dargestellte Verblendanker besteht aus dem Ankerdraht 1, der an seinen beiden Enden Aufrauhungen 2 aufweist, die gegebenenfalls als Schlaggewinde 3 ausgebildet sein können. Die Ausbildung als Schlaggewinde ist vor allem dann zweckmäßig, wenn die Festsetzung des Ankerdrahtes in der Wandinnenschale 4 beispielsweise über einen durch das Schlaggewinde 3 aufspreizbaren Spreizdübel 5 erfolgt. Zum Setzen des Dübels wird durch das Bohrloch 7 des aus Hohllochsteinen gebildeten Verblendmauerwerks 6 in der Wandinnenschale 4 ein mit dem Bohrloch 7 fluchtendes Bohrloch 7a für den Spreizdübel 5 erstellt. Nach dem Einsetzen des Dübels in das Bohrloch 7a und der Verankerung des Dübels durch Einschlagen des Ankerdrahts 1 wird die Netzhülse 8 auf das freie Ende des Ankerdrahts 1 aufgesteckt. Mit der Spitze 9 des Ankerdrahts 1 wird dabei die den Boden des Schaftteiles 10 bildende Membrane 11 durchgestoßen und die Netzhülse 8 soweit verschoben, bis sich das Schaftteil 10 im unteren und das Kopfteil 12 im oberen Quersteg des Hohllochsteines 6 befindet.

Mit einer Spritzvorrichtung 13, deren Düse auf dem einen Dichtflansch bildenden Stirnrand 14 aufsitzt, wird das aushärtbare Bindemittel, beispielsweise ein mineralischer Mörtel oder ein Kunstharzmörtel, in die Netzhülse injiziert. Durch den Spritzdruck weitet sich der über die Netzhülse gezogene elastische Kunststoffstrumpf 15 wulstartig auf und bildet in dem Hohlraum 16 des Verblendmauerwerks 6 einen Formschluß. Durch die Einbettung des Ankerdrahtendes 2 in dem ausgehärteten Bindemittel 17 und den Formschluß im Hohlraum 16 des Hohllochsteines ergibt sich eine zug- und druckfeste Verbindung zwischen dem Verblendmauerwerk 6 und der Wandinnenschale 4.

In Figur 2 ist erkennbar, daß die Netzhülse 8 aus einer Gitterhülse 18 besteht, die an ihrem einen Ende mit dem Kopfteil 12 und an ihrem anderen Ende mit dem Schaftteil 10 abschließt. Bei der aus Kunststoff bestehenden Gitterhülse ist es möglich, die Membrane 11 als dünne Spritzhaut auszubilden. Zum leichteren Verschweißen des elastischen Kunststoffstrumpfes 15 mit der Gitterhülse 18 ist am Kopf- und Schaftteil jeweils ein umlaufender Schweißwulst 20 vorgesehen. Als Dichtflansch dient der am Kopfteil 12 angeordnete Rand 14.

## Patentansprüche

1. Verblendanker zur Verbindung des Verblendmauerwerks mit der Wandinnenschale, wobei der Verblendanker aus einem in der Wandinnenschale festsetzbaren Ankerdraht besteht, der zumindest im Verblendmauerwerk mittels eines aushärtbaren Bindemittels festsetzbar ist, **dadurch gekennzeichnet**, daß auf dem im Verblendmauerwerk (6) befindlichen Teil (2) des Ankerdrahtes (1) eine Netzhülse (8) aufgesteckt ist, die aus einer mit einem Kunststoffstrumpf (15) überzogenen und ein Kopf- und Schaftteil (12, 10) aufweisenden Gitterhülse (18) besteht, wobei das Schaftteil (10) mit einer Membrane (11) verschlossen ist.

2. Verblendanker nach Anspruch 1, **dadurch gekennzeichnet**, daß die Gitterhülse (18) aus Kunststoff besteht und die Membrane (11) am Schaftteil (10) als dünne Spritzhaut ausgebildet ist.

3. Verblendanker nach Anspruch 1, **dadurch gekennzeichnet**, daß am Kopfteil (12) der Gitterhülse (18) ein als Rand (14) ausgebildeter Dichtflansch angeordnet ist.

4. Verblendanker nach Anspruch 1, **dadurch gekennzeichnet**, daß am Kopf- und Schaftteil (12, 10) der Gitterhülse (18) jeweils ein umlaufender Schweißwulst (20) angeordnet ist.

## Claims

1. Cladding anchor for connecting cladding masonry to the inner shell of the wall, the cladding anchor comprising an anchoring wire which can be fixed in the inner shell of the wall and which can be fixed at least in the cladding masonry by means of a hardenable bonding medium, **characterized in that** there is placed onto the portion (2) of the anchoring wire (1) located in the cladding masonry (6) a netting sleeve (8) which consists of a latticework sleeve (18) covered with a plastics sock (15) and having a head portion and shank portion (12, 10), the shank portion (10) being sealed by a membrane (11).

2. Cladding anchor according to claim 1, **characterized in that** the latticework sleeve (18) consists of plastics and the membrane (11) on the shank portion (10) is constructed in the form of a thin injection-moulded skin.

3. Cladding anchor according to claim 1, **characterized in that** on the head portion (12) of the latticework sleeve (18) there is arranged a sealing flange constructed in the form of a rim (14).

4. Cladding anchor according to claim 1, **characterized in that** a circumferential welding bead (20) is arranged on the head portion and on the shank portion (12, 10) of the latticework sleeve (18).

## Revendications

1. Cheville pour revêtement de mur pour réunir la maçonnerie de revêtement avec le mur non revêtu, dans laquelle la cheville pour revêtement de mur est constituée d'une tige d'ancrage qui peut se fixer dans le mur non revêtu et peut se bloquer au moins dans la maçonnerie de revêtement au moyen d'un liant durcissable, caractérisée par le fait que sur la partie (2) de la tige d'ancrage (1) qui se trouve dans maçonnerie de revêtement (6) est enfilée une douille en treillis 8 qui est constituée d'une douille ajourée (18) revêtue d'une chaussette de plastique (15) et présentant une partie formant tête et une partie formant fût (12, 10), la partie formant tête (10) étant obturée par une membrane (11).

2. Cheville pour revêtement de mur selon la revendication 1, caractérisée par le fait que la douille ajourée (18) est constituée de plastique et que la membrane (11) est formée sur la partie formant fût (10) sous forme de peau mince injectée.

3. Cheville pour revêtement de mur selon la revendication 1, caractérisée par le fait que sur la partie formant tête (12) de la cheville ajourée (18) est disposé un rebord d'étanchéité conçu sous forme d'une bordure (14).

4. Cheville pour revêtement de mur selon la revendication 1, caractérisée par le fait que sur chacune des parties Formant tête et formant fût (12, 10) de la douille ajourée (18) est disposé un collet périphérique de liaison (20).
